# EUROPEAN PATENT SPECIFICATION

(11) **EP 0 994 272 B1**
(45) Date of publication and mention of the grant of the patent: **07.06.2006**
(21) Application number: 99120571.7
(22) Date of filing: 15.10.1999
(51) Int. Cl.: F16F 15/134

(54) **Torque fluctuation absorbing apparatus**
Vorrichtung zur Dämpfung von Drehmomentschwankungen
Dispositif pour l'amortissement de variations de couple

(30) Priority: 16.10.1998 JP 29476198
(43) Date of publication of application: 19.04.2000
(73) Proprietor: AISIN SEIKI KABUSHIKI KAISHA, Kariya City, Aichi Pref. (JP)
(72) Inventor: Kamiya, Masakazu, Toyoake-shi, Aichi-ken (JP); Sadakari, Shuji, Kariya-shi, Aichi-ken (JP); Ebata, Masaru, Chita-shi, Aichi-ken (JP)
(74) Representative: TBK-Patent

(56) References cited:
- EP-A- 0 641 956
- EP-A- 0 826 899
- DE-A- 19 751 029
- US-A- 5 597 355
- US-A- 5 598 745
- US-A- 5 707 292

## Description

### Technical Field

This invention relates to a torque fluctuation absorbing apparatus incorporated into a drive system of an automobile or the like.

### Background Art

A torque fluctuation absorbing apparatus interposed between an output shaft of an engine of an automobile and an input shaft of a change gear has been known. For example, as disclosed in Japanese laid-open patent publication Hei 10-132028, a torque transmitting portion is provided to a driving side rotating member which is integrally rotated with an engine, while a torque transmitting portion is also provided to a driven side rotating member which is disposed coaxially and rotatably relative to the driving side rotating member, and resilient members such as coil springs or the like which perform the transmission of torque are mounted in a circumferential space defined between these torque transmitting members, and at least one hysteresis device which produces a given frictional resistance torque is disposed between the driving side rotating member and the driven side rotating member. The torsional performance of the coil springs (the relationship between the relative rotating angle between the driving side rotating member and the driven side rotating member and the torque) can be set as a polygonal line for making the torque fluctuation absorbing apparatus exhibit the favorable torque fluctuation absorbing performance from the low torque zone to the high torque zone. For minimizing the possibility that such coil springs which perform the transmission of torque between the driving side rotating member and the driven side rotating member come into contact with other members due to a centrifugal force and are damaged by an abrasion, means is disclosed in Fig. 7 of Japanese laid-open patent publication Hei 10-132028, for example.

In this torque fluctuation absorbing apparatus, the driving side rotating member which is integrally rotated with the engine is provided with a cylindrical guide surface directed inwardly in a radial direction. At the inner diameter side of this guide surface, the driven side rotating member is disposed coaxially with and rotatably relative to the driving side rotating member and a circumferential space is formed between the outer periphery of the driven side rotating member and the guide surface. The driving side rotating member and the driven side rotating member are respectively provided with torque transmitting members which protrude toward the inside of the space. In a circumferential space defined between these torque transmitting portions, two coil springs having a low spring load which respectively have their ends supported by spring seats which in turn are slidably guided by the guide surface and five coil springs having a high spring load greater than that of the previous coil springs having the low spring load are installed. These coil springs are arranged such that five coil springs having the high spring load are disposed in series in a circumferential direction and two coil springs having the low spring load are positioned at both circumferetial ends of the circumferential space. A torsion which exceeds a given maximum twist angle between the driving side rotating member and the driven side rotating member is regulated by the contact relationship which is established by interposing the spring seats between the torque transmitting portion of the driving side rotating member and the torque transmitting portion of the driven side rotating member and simultaneously the close contact of respective coil springs can be avoided.

As requirements of the torque fluctuation absorbing apparatus, high durability, a favorable torque absorbing performance from a low torque zone to a high torque zone, stable torque absorbing performance, low noise, compactness, being light-weighted and being at a low cost and the like are considered.

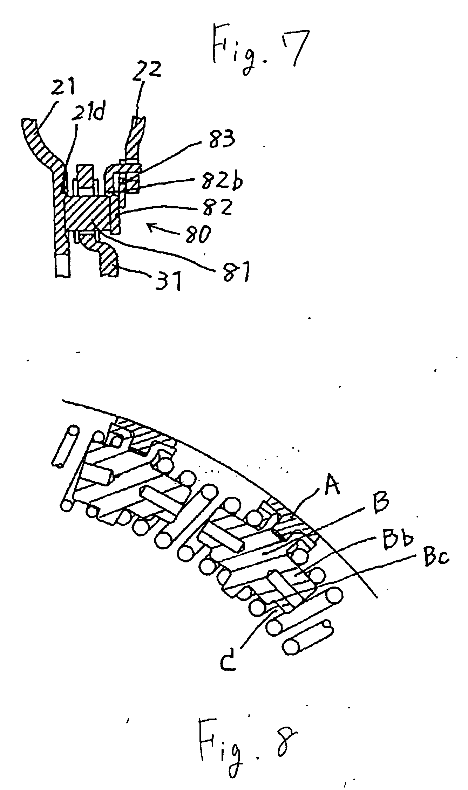

In the torque fluctuation absorbing apparatus shown in Fig. 7 of the above-mentioned laid-open publication, the torsional performance of the coil springs (the relationship between the relative twist angle between the driving side rotating member and the driven side rotating member and the torque) can be set as a polygonal line for making the torque fluctuation absorbing apparatus exhibit the favorable torque Fluctuation absorbing performance from the low torque zone to the high torque zone. Furthermore, for minimizing the possibility that such coil springs which perform the transmission of torque between the driving side rotating member and the driven side rotating member come into contact with other members due to a centrifugal force and are damaged by an abrasion, the driving side rotating member which is integrally rotated with the engine is provided with a guide surface directed inwardly in a radial direction, and at the inner diameter side of this guide surface, a portion of the driven side rotating member is disposed coaxially with and rotatably relative to the driving side rotating member, and a circumferential space is formed between the outer periphery of the driven rotating member and the guide surface, and the driving side rotating member and the driven side rotating member are respectively provided with torque transmitting members which protrude toward the inside of the space, and in a circumferential space defined between these torque transmitting portions, two coil springs having a low spring load which respectively have their ends supported by spring seats made of low friction resin which is slidably guided by the guide surface and five coil springs having a high spring load greater than that of the previous coil springs having the low spring load are installed, and these coil springs are arranged such that five coil springs having the high spring load are disposed in series in a circumferential direction and two coil springs having the low spring load are positioned at both circumferetial ends of the circumferential space. Accordingly, the torsion which exceeds a given maximum twist angle between the driving side rotating member and the driven side rotating member is regulated by the contact relationship which is established by interposing the spring seats and floating stoppers disposed inside the coil springs between the torque transmitting portion of the driving side rotating member and the torque transmitting portion of the driven side rotating member and simultaneously the close contact of respective coil springs can be avoided.

However, the spring seats are made of resin and the resin shows low thermal conductivity and hence, heat generated by a friction between the guide surface and the spring seats is dwelled or stored in the spring seats so that the abrasion of a friction portion of the spring seats relative to the guide surface is accelerated and the strength of the spring seats is lowered resulting in the rupture of the spring seats and accordingly it is less than optimal in terms of the durability.

Furthermore, seven coil springs are arranged in series and hence, the length of each coil is rather long so that an amount of expansion in a radially outward direction due to a centrifugal force is increased. Accordingly, the stress of the coil springs is increased resulting in the rupture of the coil springs or the coil springs come into contact with the guide surface resulting in the abrasion of the coil springs, or the surface roughness of the guide surface is worsened thus promoting the abrasion of the spring seats. Therefore, these coil springs and spring seats are less than optimal in terms of durability. To avoid such drawbacks, it may be considered that the number of the coil springs are increased, floating stoppers are eliminated,or boss portions of the spring seats are slightly elongated. However, there exists substantially no gap between the outer periphery of the boss portion and the coil spring along the entire length of the boss portion and hence, a centrifugal force acting on the coil spring is loaded to the distal end of the boss portion thus resulting in the rupture of the spring seats.

In the torque fluctuation absorbing apparatus disclosed in the above-mentioned laid-open publication, two hysteresis mechanisms are provided, wherein one hysteresis mechanism is comprised of a block-like thrust lining which is inserted in a window portion formed in the portion of the driven side rotating member such that it is movable in an axial direction, a thrust plate which is connected to the driving side rotating member such that it is integrally rotated with the driving side rotating member but is movable in an axial direction relative to the driving side rotating member and sandwiches the thrust lining from both axial sides together with the driving side rotating member, and a cone spring which biases the thrust plate to the thrust lining. Furthermore, on a friction surface of the driving side rotating member which is brought into a friction contact with the thrust lining, a step portion which restricts the movement of the thrust lining in the radially outward direction is formed and a point of the thrust plate where the force of the cone spring is applied is disposed at the inner-diameter side from the center of the thrust lining in a radial direction.

However, since the position of the step portion which restricts the movement of the thrust lining in a radially outward direction is radially shifted from the force applying point of the cone spring, there is the possibility that the thrust lining runs over the step portion due to a centrifugal force and then drops out so that it is less than optimal in terms of durability.

Furthermore, in the above-mentioned hysteresis device of the conventional torque fluctuation absorbing apparatus, the position of the cone spring in a radial direction is determined by inner peripheral surfaces of a plurality of bent pawl portions formed on the thrust plates and the outer peripheral surface of the cone spring. However, because of the presence of an unavoidable gap defined between the pawl portions and the outer peripheral surface of the cone spring, the position of the cone spring is offset so that an offset load is applied to the thrust lining thus giving rise to an offset abrasion and the dropping out of the thrust lining is promoted. Accordingly, it is less than optimal in terms of durability.

In the above-mentioned hysteresis device of the conventional torque fluctuation absorbing apparatus, at the time of the relative rotation between the driving side rotating member and driven side rotating member, the thrust lining and the driven side rotating member directly come into contact with each other and hence, in case material having a high hardness is used as material of the thrust lining for enhancing the abrasion, the resistance of the thrust lining, an impinging sound offensive to the ear occurs and accordingly it is less than optimal in terms of noise.

Furthermore, since the above-mentioned hysteresis device of the conventional torque fluctuation absorbing apparatus is of a dry type, the friction resistance toruque varies greatly as it is used for a long time and hence, it is less than optimal in terms of the torque fluctuation absorbing performance and the durability.

Furthermore, for making the conventional torque fluctuation absorbing apparatuses small-sized and light-weighted and for manufacturing them at a low cost, the driven side rotating member is comprised of a driven disc which constitutes a part of the driven side rotating member and a flywheel which is joined to the driven side rotating member by means of a large number of bolts, and these bolts are disposed in a circumferentially equally spaced apart manner, and the head portions of these bolts are disposed at the opposite flywheel side of the driven side rotating member while a large number of holes for fastening bolts are formed in the driven side rotating member.

However, dust or the like infiltrates into the inside from the outside through a large number of holes for fastening bolts and causes malfunctions and hence, it is less than optimal in terms of durability. Furthermore, the interval between bolts is determined based on the high load applied portion, the number of bolts is increased and hence, it is less than optimal in terms of making the torque fluctuation absorbing apparatus light-weighted and manufacturing the apparatus at a low cost.

Still furthermore, for making the conventional torque fluctuation absorbing apparatuses small-sized and light-weighted and for manufacturing them at a low cost, the driving side rotating member is comprised of a first drive plate and a second drive plate which have their outer peripheral portions welded to each other by a laser. However, the irradiation range of the laser is narrow, it must accurately focus on the joining portion and the defective products are liable to be produced and hence, it is less than optimal in terms of lowering of the manufacturing cost. The object of the invention is to enhance the durability of the spring seats.

### Disclosure of the Invention as Claimed

This object is solved with an apparatus according to claim 1.

The invention as called for in claim 1 of the present application is directed to the torque fluctuation absorbing apparatus which is constructed such that a guide surface which is directed in a radially inward direction is formed on a driving side rotating member which is integrally rotated with an engine, a portion of a driven side rotating member which is disposed coaxially and rotatably relative to the driving side rotating member is disposed on the inner diameter side of the guide surface so as to define a circumferential space between the outer periphery of the portion and the guide surface, torque transmitting members which protrude in said space are respectively mounted on the driving side rotating member and the driven side rotating member, coil springs which have both ends thereof supported by spring seats being slidably guided by the guide surface are mounted in a circumferential space defined between both torque transmitting portions, and an improvement thereof is characterized in that the spring seats are respectively made of resin made slide members which are brought into contact with the guide surface and seat members which are made of metal having a higher thermal conductivity than a resin material of the slide member and are made to support ends of the coil springs and are thermally brought into contact with the slide member.

According to this torque fluctuation absorbing apparatus, the heat generated by the friction between the resin made slide member of the spring seat and the guide surface is transmitted to the seat members made of a metal having a favorable thermal conductivity such as an aluminum alloy and is radiated and hence, the abrasion resistance of the slide member is enhanced and the damage on the slide members and the seat members can be obviated.

The invention as called for in claim 2 of the present application is directed to the torque fluctuation absorbing apparatus of the torque fluctuation absorbing apparatus as described in claim 1 and is characterized in that a surface of the slide member and a surface of the seat member face each other in a radially opposed manner and a protrusion and a recess portion formed respectively on the former surface and the latter surface are brought into a fitting engagement with each other so as to connect the slide member and the seat member. With such a torque fluctuation absorbing apparatus, the connecting operation of the slide member and the seat member can be facilitated and furthermore a favorable thermal contact can be obtained.

The invention as called for in claim 3 of the present application is directed to the torque fluctuation absorbing apparatus of the torque fluctuation absorbing apparatus as described in claim 2 and is characterized in that the protrusion formed on the slide member and the recess portion formed in the seat member are brought into the fitting engagement with each other by way of an adhesive agent so as to connect the slide member and the seat member.
With such a torque fluctuation absorbing apparatus, the slide member and the seat member are connected and are brought into close contact with by means of the adhesive agent and hence, the slide member and the seat member are firmly and integrally united thus improving the thermal conductivity from the slide member to the seat member. The adhesive agent may preferably have a favorable thermal conductivity and, for example, the adhesive agent into which an aluminum alloy in a powdery form is mixed can be used as the adhesive agent.

### Brief Description of the Drawings

Fig. 1 is a longitudinal cross-sectional view of the first embodiment of a torque fluctuation absorbing apparatus of the present invention.
Fig. 2 is a front elevation view with a part broken away as seen from the right side of Fig. 1.
Fig. 3 is a partially enlarged view of Fig. 2.
Fig. 4 is a partially enlarged view of Fig. 1.
Fig. 5 is a front elevation view of a driven plate in Fig. 1.
Fig. 6 is a diagram showing the torsion characteristics of the torque fluctuation absorbing apparatus shown in Fig. 1 to Fig. 5.
Fig. 7 is a view showing a modification of a first hysteresis device 80 shown in Fig. 4.
Fig. 8 is a view showing a modification of a boss portion Bb of a seat member B shown in Fig. 3.
Fig. 9 is a view showing a modification of a structure which clogs holes for fastening bolt.

The present invention, other objects of the present invention and other features of the present invention will be clearly understood from the following explanation in view of the drawings.

### Detailed Description of the Embodiment

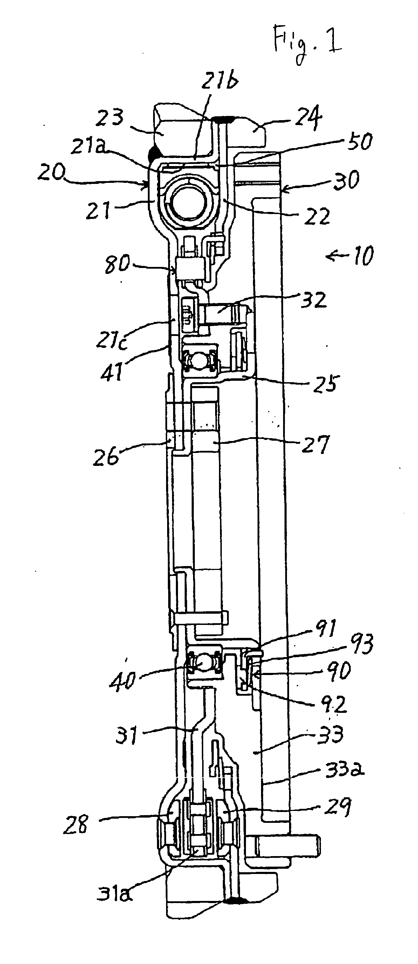

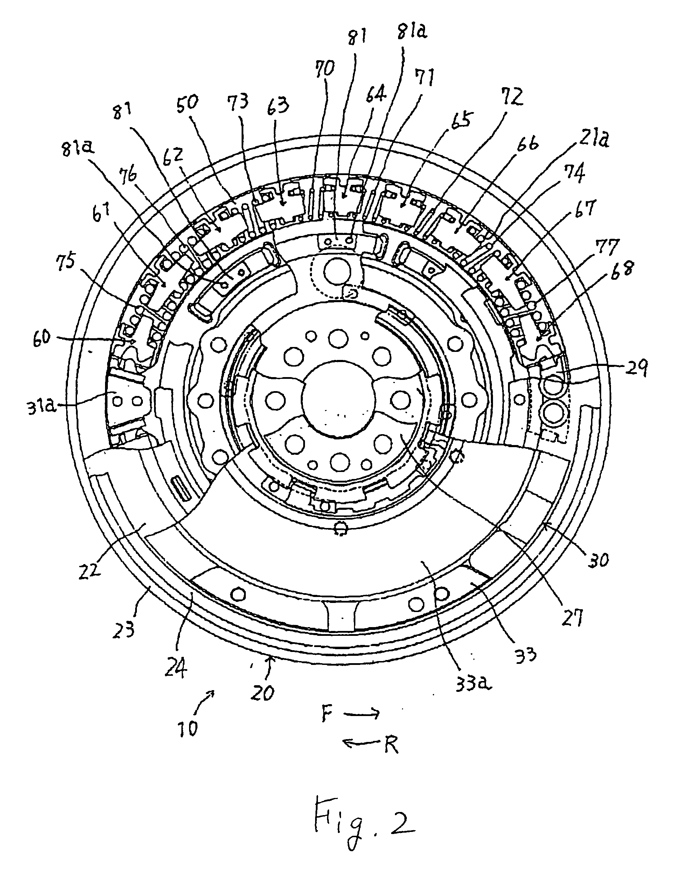

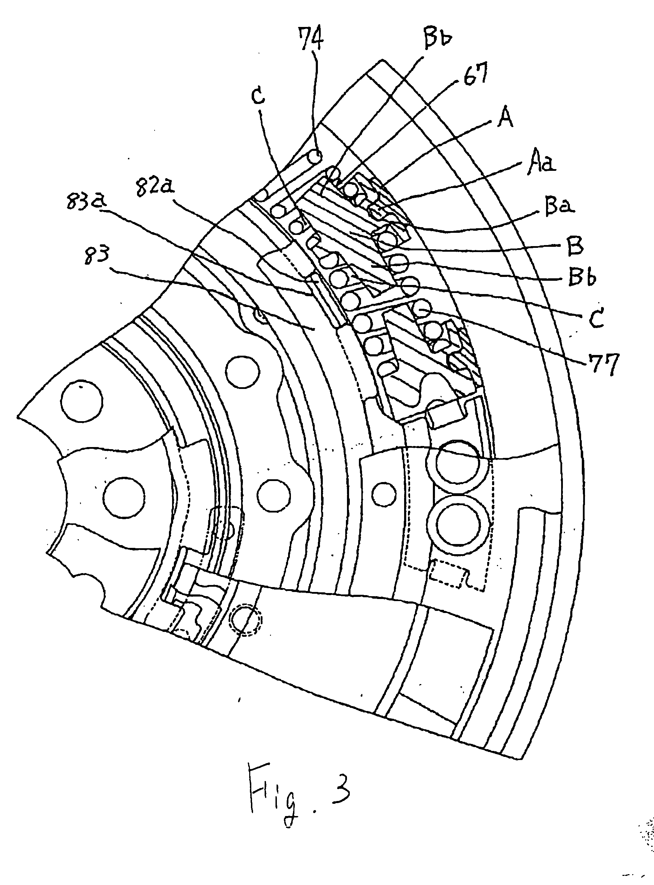

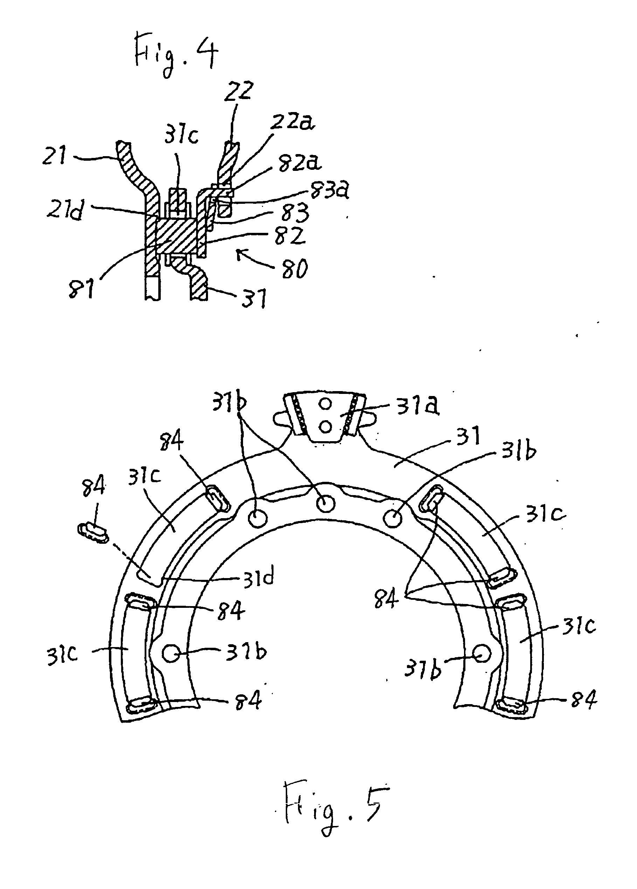

Fig. 1 to Fig. 5 show the first embodiment of a torque fluctuation absorbing apparatus according to the present invention, wherein Fig. 1 is a longitudinal cross-sectional view, Fig. 2 is a front elevation view with a part broken away as seen from the right side of Fig. 1, Fig. 3 is a partially enlarged view of Fig. 2, Fig. 4 is a partially enlarged view of Fig. 1, and Fig, 5 is a front elevation view of a driven disc of. 1. In Fig. 1 and Fig. 2, a hatching for showing the cross section is omitted for facilitating the understanding of drawings.

As shown in Fig. 1 to Fig. 5, a torque fluctuation absorbing apparatus 10 includes a driving side rotating member 20 and a driven side rotating member 30. The driving side rotating member 20 comprises a first drive plate 21, a second drive plate 22, a ring gear 23, an inertia ring 24, an inner plate 25 and spacers 26, 27 as constituent elements. A cylindrical portion 21b which forms an outer peripheral portion of the first drive plate 21 defines a guide surface 21a on the inner periphery thereof. The first drive plate 21, the second drive plate 22 and the inertial plate 24 have their outer peripheral portions welded to each other, while the ring gear 23 is welded to the first drive plate 21. A plasma welding is adopted for welding the first drive plate 21, the second drive plate 22 and the inertial plate 24 so that even when the position of the joining surface is slightly shifted, the welding can be performed without fail. For welding the ring gear 23 and the first drive plate 21, the arc welding is adopted. The first drive plate 21, the inner plate 25 and the spacers 26, 27 are joined by rivets. These elements are joined to an engine by means of bolts (not shown in drawings) which pass through axial holes formed in these elements and are threaded into an output shaft (not shown in drawings) of the engine.

The driven side rotating member 30 includes a driven disc 31 which is positioned between the first drive plate 21 and the second drive plate 22 in an axial direction and a flywheel 33 to which the driven disc 31 is connected by means of eight bolts 32 which are disposed in a circumferentially spaced-apart manner. The flywheel 33 is rotatably supported on the inner plate 25 by way of a ball bearing 40. The flywheel 33 has a friction surface 33a for a friction clutch (not shown in drawings) which is provided for carrying out or stopping the transmission of torque between the engine and a transmission device (not shown in drawings).

As shown in Fig. 1, heads of the bolts 32 are disposed between the first drive plate 21 and the driven disc 31 in an axial direction. For fastening these bolts 32, eight holes 21c are formed in the first drive plate 21. To prevent dust or the like present in the outside of the torque fluctuation absorbing apparatus 10 from intruding into the inside by way of these holes 21c, an adhesive tape 41 which covers the holes 21c from the outside of the first drive plate 21 is adhered to an outer surface of the first drive plate 21. Material of the adhesive tape 41 is polyester.

Between the guide surface 21a of the first drive plate 21 and the outer periphery of the driven disc 31, a circumferential space 50 is defined. In this space 50, a pair of torque transmitting members 28, 29 and a torque transmitting portion 31a are mounted at two positions which are circumferentially shifted 180 degree from each other, wherein a pair of torque transmitting members 28, 29 are secured to the drive plates 21, 22 by means of rivets, while the torque transmitting portion 31a is formed on the outer periphery of the driven disc 31 and is positioned between the torque transmitting members 28, 29.

In two respective circumferential spaces defined between the torque transmitting members 28, 29 and the torque transmitting portion 31a which are circumferentially shifted 180 degree from each other, three coil springs 70-72 having a low spring load, two coil springs 73, 74 having an intermediate spring load and three coil springs 75, 76, 77 having a high spring load are disposed circumferentially and in series, wherein these coil springs 70-77 have respective both ends thereof supported by nine spring seats 60-68 which are slidably guided by the guide surface 21a of the first drive plate 21.

In accordance with the present invention, as shown in Fig. 3, respective spring seats 60- 68 are formed by combining a resin-made slide member A which is slidable on the guide surface 21a and an aluminum-alloy-made seat member B which supports the ends of the coil springs and has a favorable thermal conductivity in such a manner that they are brought into heat contact with each other. Due to such a construction, heat generated by the friction between the slide member A and the guide surface 21a is transmitted from the slide member A to the seat member B and is effectively radiated from the seat member B. Accordingly, the deterioration of the abrasion resistance and strength caused by dwelling or storing of heat in the slide member A can be prevented. As, shown in Fig. 3, the joining between the slide member A and the seat member B is achieved by facing the surface of the slide member A and the surface of the seat member B in an opposed manner in a radial direction and fitting a protrusion Aa formed on the surface of the slide member A into a corresponding recess Ba formed in the seat member B while interposing an adhesive agent. An aluminum alloy in a powdery form is mixed into the adhesive agent for enhancing the thermal conductivity of the adhering agent.

As shown in Fig. 2 and Fig. 3, each member B is provided with boss portions Bb which extend toward the inner peripheral sides of the coil springs. The boss portion Bb is tapered such that it gradually reduces its diameter toward a distal end thereof and the outer diameter of the proximal portion of the boss portion Bb is substantially equal to the inner diameter of the coil spring. Since the coil springs 70-77 have their both ends respectively supported by the spring seats 60-68 guided by the guide surface 21a, even when a centrifugal force is applied, the respective coil springs 70-77 are prevented from coming into contact with the guide surface 21a of the first drive plate 21 so that the coil springs 70-77 are prevented from abrasion and damage. Furthermore, an escape space or a play space C is present between the outer periphery of the boss portion Bb and the inner periphery of the coil spring except for the proximal portion of the boss portion Bb and hence, although the centrifugal force acting on the coil spring is applied to the proximal portion of the boss portion Bb, it is not applied to the distal end portion or the like of the boss portion Bb. Accordingly, the generation of an excessive stress at the proximal portion of the boss portion Bb can be restricted so that damage on the seat member B is obviated. Furthermore, two opposing boss portions Bb of the seat members B located at both ends of the coil spring come closer to each other corresponding to the increase of an amount of deflection of the coil spring and then come into contact with each other so that an amount of deflection of the coil spring is restricted thus preventing the coil spring from becoming in a close contact condition. As can be understood from the above, the spring load of the coil springs 70-77 is varied corresponding to amounts of deflection of the coil springs. The maximum twist angle between the driving side rotating member 20 and the driven side rotating member 30 is determined in such a manner that the torque transmitting members 28, 29 and the torque transmitting portion 31a are brought into a contact relationship by way of the spring seats 60-68.

The rotating direction of the engine is a direction of normal rotation F shown by an arrow in Fig. 2 and the direction of the engine drive torque which works between the driving side rotating member 20 and the driven side rotating member 30 agrees with the direction of the normal rotation F. Furthermore, the direction of the engine brake torque which works between the driving side rotating member 20 and the driven side rotating member 30 agrees with the rotation of a negative direction R shown by an arrow in Fig. 2.

The coil springs 70-77 are arranged in the order of the coil springs 75, 76 having the high spring load, the coil spring 73 having the intermediate spring load, the coil spring 70, 71, 72 having the low spring load, the coil spring 74 having the intermediate spring load and the coil spring 77 having the high spring load from one end portion to the other end portion of the direction F of the normal rotation in the circumferential space. The maximum values of the respective spring load of the coil springs 75-77 having the high spring load are set to values greater than values necessary for transmitting the maximum drive torque of the engine. The minimum spring load (the spring load at the time of setting the spring) of the coil spring 75 is set to a value smaller than the value necessary for transmitting the maximum drive torque of the engine.

The maximum value of the spring load of the spring 77 is set to a value greater than the value necessary for transmitting the maximum brake torque of the engine. The minimum spring load (spring load at the time of setting spring) of the coil spring 77 is set to a value smaller than the value necessary for transmitting the maximum brake torque of the engine.

As shown in Fig. 5, the driven disc 31 includes eight holes 31b-31b for permitting the bolts 32 to pass therethrough. In a circumferential direction, the circumferential distance or interval between the holes 31b-31b is set narrow in the vicinity of the torque transmitting portion 31a and is set wide at a position remote from the torque transmitting portion 31a. That is, eight bolts 32 are rationally arranged such that the circumferential distance or interval between the bolts 32 is set narrow at the portion with a large load, while the circumferential distance or interval between the bolts 32 is set wide at the portion with a small load.

As shown in Fig. 2 and Fig. 4, between the driving side rotating member 20 and the driven side rotating member 30, hysteresis devices 80, 90 which generate a given frictional resistance torque against the relative rotation between them, that is, a torsion are interposed.

As shown in Fig. 4 and Fig. 5, the hysteresis device 80 comprises six block-like thrust linings 81-81 which are movably inserted into six circumferentially elongated window portions 31c-31c formed in the driven disc 31, a ring-like thrust plate 82 which is connected to the second drive plate 22 in such a manner that the thrust plate 82 is integrally rotated with the second drive plate 22 but is movable in an axial direction relative to the second drive plate 22 and sandwiches the thrust linings 81-81 together with the first drive plate 21 from both axial sides, and a cone spring 83 which biases the thrust plates 82 to the thrust linings. The connection between the second drive plate 22 and the thrust plate 82 is achieved by inserting three or more bent pawl portions 82a formed on the outer periphery of thrust plate 82 into square holes 22a formed in the second drive plate 22. Respective bent pawl portions 82a are also fitted into corresponding notched portions 83a formed in the outer periphery of the cone spring 83. Since such a fitting engagement between the notched portion 83a and the bent pawl portion 82a is present at three or more locations in a circumferential direction, the cone spring 83 is accurately centered and positioned due to a contact between the both circumferential ends of the bent pawl portions 82a and the drive plate 22. Accordingly, an action of offset loading to the thrust linings 81 can be eliminated thus preventing the occurrence of abrasion of the thrust linings 81.

As shown in Fig. 4, to assuredly prevent the thrust lining 81 from dropping out due to the centrifugal force, a step portion 21d is formed on a friction surface of the first drive plate 21. A force applying point of the cone spring 83 to the thrust plate 82 is located at the outer diameter side from the center of the thrust linings 81 in a radial direction.

To restrict the change of friction resistance torque generated by the hysteresis device 80 which occurs as the time elapses, grease is coated on the friction portions of the thrust lining 81, the drive plate 21 and the thrust plate 82. For maintaining the lubrication action of the grease for a long period, a grease recessed portion 81a is formed in the friction surface of the thrust lining 81 (see Fig. 2).

Furthermore, to eliminate an impinging sound offensive to the ear which is generated in case the thrust linings 81 directly come into contact with the driven disc 31, as shown in Fig. 5, rubber members 84 are mounted on both circumferential ends of respective window portions 31c of the driven disc 31 so that the thrust linings 81 establish the contact relationship with the driven disc 31 by way of the rubber members 84. Mounting of respective rubber members 84 to the window portions 31c is achieved by fitting the rubber member 84 into enlarged width portions 31d formed at the circumferential ends of the window portions 31c after applying the compression to the rubber member 84 preliminarily or providing protrusions for holding rubber members at both circumferential ends of the window portions 31c of the driven disc 31.

As shown in Fig. 1, the second hysteresis device 90 includes a thrust plate 91 which is connected to the inner plate 25 such that it is not rotatable relative to the inner plate 25 but is axially movable relative to the inner plate 25, thrust linings 92 which are sandwiched by this thrust plate 91 and the flywheel 33 from both axial sides and are connected to the thrust plate 91 such that the thrust linings 92 are not rotatable relative to the thrust plate 91, and a cone spring 93 which biases the thrust plate 91 toward the thrust linings 92. Grease is also coated on the friction portions of the hysteresis device 90.

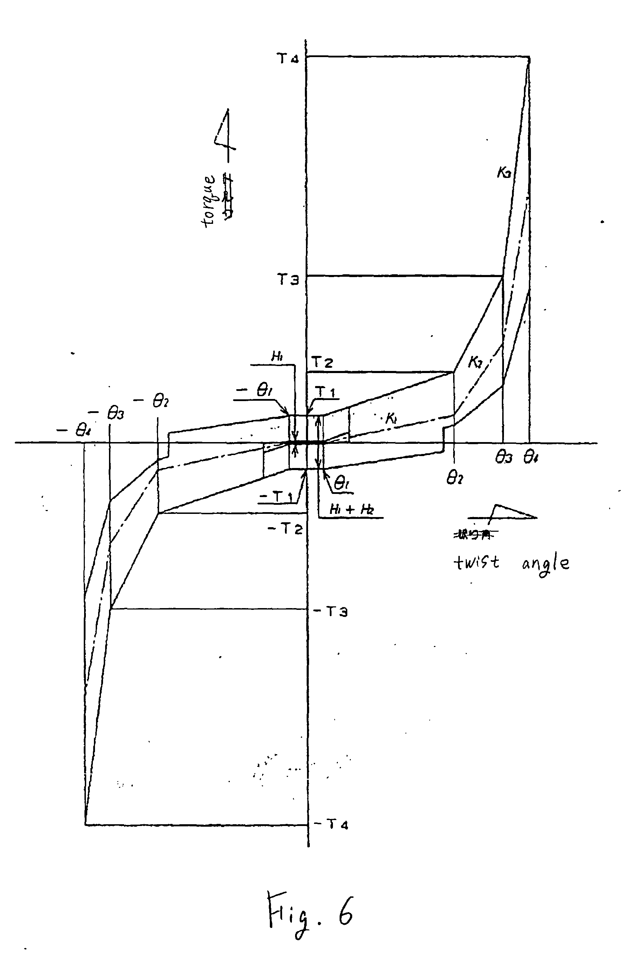

Fig. 6 is a diagram showing the torsional performance of the torque fluctuation absorbing apparatus shown in Fig. 1 to Fig. 5. Fig. 2 shows the torque fluctuation absorbing apparatus in a condition where the twist angle is zero, wherein between the respective torque transmitting portions 31a and the spring seats disposed next to the torque transmitting portions 31a, gaps are defined respectively. These gaps extinguish when the twist angle reaches the twist angle θ1 or -θ1 shown in Fig. 6. When the twist angle is in the range of the twist angle θ1 ~ θ*2*, -θ1 ~ - θ*2* shown in Fig. 6, the coil springs 70-77 are shrunken or elongated. When the twist angle reaches the twist angle θ*2* or -θ*2* shown in Fig. 6, the coil springs 70-72 having a low spring load are completely shrunken, and when the twist angle is in the range of twist angle θ*2* ~ θ*3* , -θ*2* ~ -θ*3* shown in Fig . 6, the coil springs 73-77 are shrunken or elongated. When the twist angle reaches the twist angle θ*3* or -θ*3* shown in Fig. 6, the coil springs 74, 75 are also completely shrunken, and when the twist angle is in the range of twist angle θ*3* ~ θ*4*, -θ*3* ~ -θ*4* shown in Fig. 6, the coil springs 75-77 having a high spring load are shrunken or elongated. A hysteresis torque H2 shown in Fig. 6 is given by the hysteresis device 80 and a hysteresis torque H1 shown in Fig. 6 is given by the hysteresis device 90.

To prevent dropping out of the thrust linings 81 by a centrifugal force more assuredly, as shown in Fig. 7, step portions 21d and 82b are respectively formed on the friction surface of the first drive plate 21 and the friction surface of the thrust pilate 82. Then, a force applying point of the cone spring 83 to the thrust plate 82 may be disposed at the outer diameter side from the center of the thrust linings 81 in a radial direction.

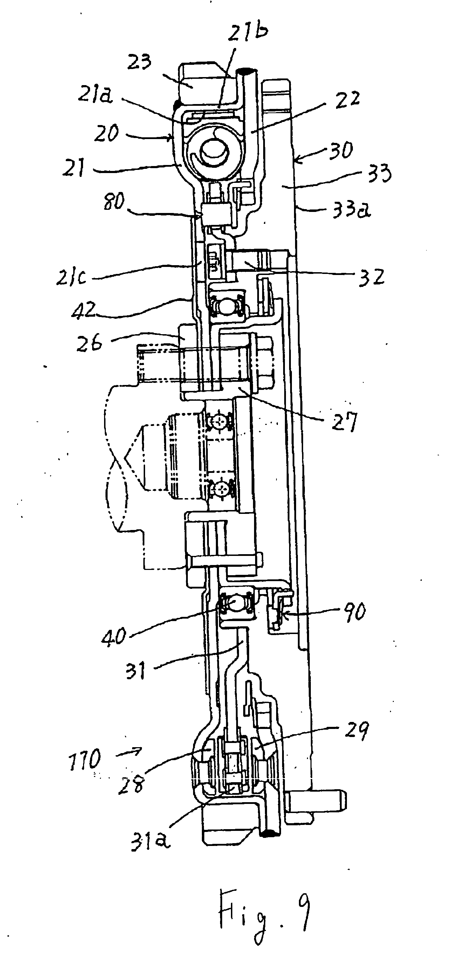

Furthermore, the play space C which is provided for preventing the centrifugal force applied to the coil spring from being loaded to a portion other than the proximal end of the boss Bb of the respective seat member B of spring seats 60-68 can perform its function so long as the play space C is formed at the inner side of the boss portion Bb in a radial direction. Accordingly, the play space C may be formed by providing a step portion Bc at the radially inner side of the boss portion Bb as shown in Fig. 8.

Furthermore, as shown in Fig. 9, holes 21c for fastening bolts formed in the first drive plate 21 may be covered with and clogged by a plate 42 sandwiched between the first drive plate 21 and the spacer 26.

The torque fluctuation absorbing device enhances the abrasion resistance of the spring seats and prevents damage on them. Spring seats 60-68 which support respective ends of coil springs 70-77 are disposed in a circumferential space defined between the torque transmitting portions 28, 29 of the driving side rotating member and the torque transmitting member 31a of the driven side rotating member which are shifted 180 degrees in a circumferential direction. Respective spring seats 60-68 are made of a resin-made slide member A which is slidable on the guide surface 21a of the driving side rotating member and the aluminum-alloy-made seat member B and hence, heat generated by the slide movement between the slide member A and the guide surface 21a is transmitted from the slide member A to the seat member B and is radiated from the seat member B. Accordingly the heat is not dwelled in the slide member A so that lowering of the abrasion resistance and lowering of strength which are caused by heat can be effectively prevented.

## Claims

1. A torque fluctuation absorbing apparatus being constructed such that a guide surface (21a) which is directed in a radially inward direction is formed on a driving side rotating member (20) to be integrally rotated with an engine, a portion (31) of a driven side rotating member (30) which is disposed coaxially and rotatably relative to said driving side rotating member (20) is disposed on the inner diameter side of said guide surface (21a) so as to define a circumferential space (50) between the outer periphery of said portion (31) and said guide surface (21a), torque transmitting members (28, 29, 31a) which protrude in said space are respectively mounted on said driving side rotating member (20) and said driven side rotating member (30), coil springs (70 to 77) which have both ends thereof supported by spring seats (60 to 68) being slidably guided by said guide surface (21a) are mounted in a circumferential space (50) defined between both torque transmitting members (20, 30),
**characterized in that** said respective spring seat (60 to 68) is made of a resin-made slide member (A) which is brought into contact with said guide surface (21a) and a seat member (B) which is made of metal having a higher thermal conductivity than resin material of said slide member (A) and is made to support ends of said coil springs (70 to 77) and is thermally brought into contact with said slide member (A).

2. A torque fluctuation absorbing apparatus according to claim 1, wherein a surface of said slide member (A) and a surface of said seat member (B) face each other in a radially opposed manner, and a protrusion and a recess portion formed respectively on the former surface and the latter surface are brought into a fitting engagement with each other so as to connect said slide member (A) and said seat member (B).

3. A torque fluctuation absorbing apparatus according to claim 2, wherein said protrusion formed on said slide member (A) and said recess portion formed in said seat member (B) are brought into said fitting engagement with each other by way of an adhesive agent so as to connect said slide member (A) and said seat member (B).

## Patentansprüche

1. Gerät zum Absorbieren von Momentenschwankungen, das so aufgebaut, dass eine Führungsfläche (21a), die in einer radial nach Innen gerichteten Richtung gewandt ist, an einem antreibenden Drehelement (20) so ausgebildet ist, dass sie sich einstückig mit einer Kraftmaschine dreht, dass ein Abschnitt (31) eines angetriebenen Drehelementes (30), das koaxial und zu dem antreibenden Drehelement (20) relativ drehbar angeordnet ist, an der Innendurchmesserseite der Führungsfläche (21a) angeordnet ist, um so einen Umfangsraum (50) zwischen dem Außenumfang des Abschnittes (31) und der Führungsfläche (21a) zu definieren, dass Momentenübertragungselemente (28, 29, 31a), die in dem Raum vorstehen, an dem antreibenden Drehelement (20) bzw. dem angetriebenen Drehelement (30) angebracht sind, dass Schraubenfedern (70 bis 77), deren beide Enden durch Federsitze (60 bis 68) gestützt sind, die gleitbar durch die Führungsfläche (21a) geführt sind, in einem Umfangsraum (50) angebracht sind, der zwischen beiden Momentenübertragungselementen (20, 30) definiert ist,
**dadurch gekennzeichnet, dass** der entsprechende Federsitz (60 bis 68) aus einem Kunstharz-Gleitelement (A), das in einen Kontakt mit der Führungsfläche (21a) gebracht ist, und aus einem Sitzelement (B) besteht, das aus einem Metall mit einer höheren Wärmeleitfähigkeit als das Kunstharzmaterial des Gleitelementes (A) besteht, und das Enden der Schraubenfedern (70 bis 77) stützt und mit dem Gleitelement (A) thermisch in Kontakt gebracht ist.

2. Gerät zum Absorbieren von Momentenschwankungen gemäß Anspruch 1, wobei eine Fläche des Gleitelementes (A) und eine Fläche des Sitzelementes (B) radial einander gegenüberliegen, und wobei ein Vorsprung und ein Aussparungsabschnitt, die an der erstgenannten Fläche bzw. an der letztgenannten Fläche ausgebildet sind, miteinander in einen Passeingriff so gebracht sind, dass das Gleitelement (A) mit dem Sitzelement (B) verbunden ist.

3. Gerät zum Absorbieren von Momentenschwankungen gemäß Anspruch 2, wobei der Vorsprung, der an dem Gleitelement (A) ausgebildet ist, und der Aussparungsabschnitt, der in dem Sitzelement (B) ausgebildet ist, miteinander in den Passeingriff durch ein Klebemittel gebracht sind, so dass das Gleitelement (A) mit dem Sitzelement (B) verbunden ist.

## Revendications

1. Appareil d'amortissement des variations de couple étant construit de telle sorte qu'une surface de guidage (21a), qui est dirigée dans une direction de manière radiale vers l'intérieur, est formé sur un organe tournant du côté de l'entraînement (20), qui doit être intégralement tourné avec un moteur, une partie (31) d'un organe tournant du côté de l'entraînement (30) qui est disposé de manière coaxiale et de manière à pouvoir tourner par rapport au dit organe tournant du côté de l'entraînement (20), est disposée du côté du diamètre interne de ladite surface de guidage (21a) de sorte à définir un espace circonférentiel (50) entre la périphérie externe de ladite partie (31) et ladite surface de guidage (21a), des organes de transmission du couple (28, 29, 31a) qui font saillie dudit espace, sont respectivement montés sur ledit organe tournant du côté de l'entraînement (20) et sur ledit organe tournant du côté de l'entraînement (30), des ressorts hélicoïdaux (70 à 77) qui ont les deux extrémités de ceux-là supportées par des surfaces d'appui de ressort (60 à 68) qui sont guidées de manière coulissante par ladite surface de guidage (21a), sont montés dans un espace circonférentiel (50) défini entre les deux organes de transmission de couple (20, 30),
**caractérisé en ce que** ladite surface respective d'appui de ressort (60 à 68) est réalisée en un organe coulissant réalisé en résine (A) qui est mis en contact avec ladite surface de guidage (21a) et avec un organe à surface d'appui (B) qui est réalisé en métal ayant une conductivité thermique plus élevée que le matériau en résine dudit organe coulissant (A) et qui est fait pour supporter les extrémités desdits ressorts hélicoïdaux (70 à 77) et qui est, de manière thermique, mis en contact avec ledit organe coulissant (A).

2. Appareil d'amortissement des variations de couple selon la revendication 1, dans lequel une surface dudit organe coulissant (A) et une surface dudit organe à surface d'appui (B) se font face d'une manière opposée de manière radiale et une saillie et une partie à renfoncement formées respectivement sur la précédente surface et sur la dernière surface sont amenées en une mise en prise par emboîtement l'une avec l'autre de sorte à raccorder ledit organe coulissant (A) et ledit organe à surface d'appui (B).

3. Appareil d'amortissement des variations de couple selon la revendication 2, dans lequel ladite saillie formée sur ledit organe coulissant (A) et ladite partie à renfoncement formée dans ledit organe coulissant (B) sont amenées en une mise en prise par emboîtement l'une avec l'autre au moyen d'un agent adhésif de sorte à raccorder ledit organe coulissant (A) et ledit organe à surface d'appui (B).
